# EUROPEAN PATENT APPLICATION

(11) **EP 2 083 422 A1**
(43) Date of publication of application: **29.07.2009**
(21) Application number: 09250232.7
(22) Date of filing: 28.01.2009
(51) Int. Cl.: G11B 27/10, G11B 27/30, G06F 17/30, G10H 1/36, G11B 20/00

(54) **Media modelling**

(30) Priority: 04.03.2008 US 41940; 28.01.2008 GB 0801512
(71) Applicant: Fortium Technologies Ltd., Bennett Street Bridgend Glamorgan CF31 3SH (GB)
(72) Inventor: Miles, Anthony, Bridgend, Glamorgan CF31 3SH (GB); Miles, Robert, Bridgend, Glamorgan CF31 3SH (GB)
(74) Representative: Cross, James Peter Archibald

(57) **Abstract**

Media content is recorded in a format that includes embedded control information (1) for controlling reproduction of the media content.

## Description

### Field of the Invention

The present invention relates to a method, apparatus and computer program for media modelling, particularly for audio and/or video modelling.

### Background of the Invention

Media modelling involves the adjustment of media playback parameters. One common example is the adjustment of playback parameters of a pre-recorded media item or track: for an audio track, an audio tone control or equalizer can be used to adjust tonal parameters. Audio modelling may also alter the waveform of audio playback to add effects such as echo flanging, phasing and harmony. For a video track, the contrast and brightness may be adjusted during playback. Media modelling is also used prior to recording to adjust the characteristics of recorded instruments or vocals prior to mixing the final track; once the final track is recorded, the end user has only a limited choice of adjustments that can be made to the final track.

Audio information may be recorded in an audio format, in which the actual waveform of the audio information is recorded, or in a 'score' format, consisting of a set of instructions for producing a particular work. The most widely used 'score' format is the MIDI (Musical Instrument Digital Interface) format. Audio formats are preferred for distribution of audio information to listeners, since they can accurately represent an actual performance or audio mix. Musicians or composers prefer score formats, as they allow editing in order to produce a finished work. Hence, a digital music track may be recorded as one or more MIDI files, which are then mixed and distributed in audio format.

Patent publication WO 06/027605 discloses an extendible media content rendering system primarily for use with embedded devices such as mobile phones. Signal processing code is embedded in score format media content, the code being used to render the media content.

Audio equalizers may have a number of presets, such as 'pop', 'rock', 'classical' and 'speech', by which the user selects a musical genre, and the equalizer is then adjusted to give optimal reproduction for that genre. This arrangement is convenient if a listener wishes to listen to a collection of tracks of a common genre, but less convenient for playback of a compilation of different genres, such as a random or 'shuffled' playback of all tracks stored on a media storage device.

Video modelling is used in media production, but is not widely used in the home environment; examples of video modelling by the end user include the distortion of standard aspect video to wide screen format, and vice versa. Video settings may be made automatically by detecting the video signal type (e.g. standard or wide screen). Some televisions allow the user to select one of a number of preset picture ambience settings.

### Statement of the Invention

According to one aspect of the present invention, there is provided a media modelling method in which a media content item is stored in a media format that includes embedded control information for controlling reproduction of the media content.

According to another aspect of the present invention, there is provided a media reproduction apparatus, including means for reproducing media content stored in a media format that includes embedded control information for controlling reproduction of the media content, and means for controlling the reproduction of the media content according to the control information.

The control information may be constant for reproduction of the entire item, or may vary with the reproduction progress of the media content item. The control information may control reproduction of the media content, or may control other effects ancillary to the reproduction of the media content, such as lighting effects.

The control information may allow the dynamic control of audio and/or video parameters by using selectable or preset control codes, in the form of tables or otherwise, embedded within pre-recorded media content

The control information may include information for controlling output devices other than the media reproduction device, such as lighting equipment. In this way, the media content may comprise multimedia content.

The control information may enable or disable specified elements of the reproduction apparatus, or restrict access thereto.

### Brief Description of the Drawings

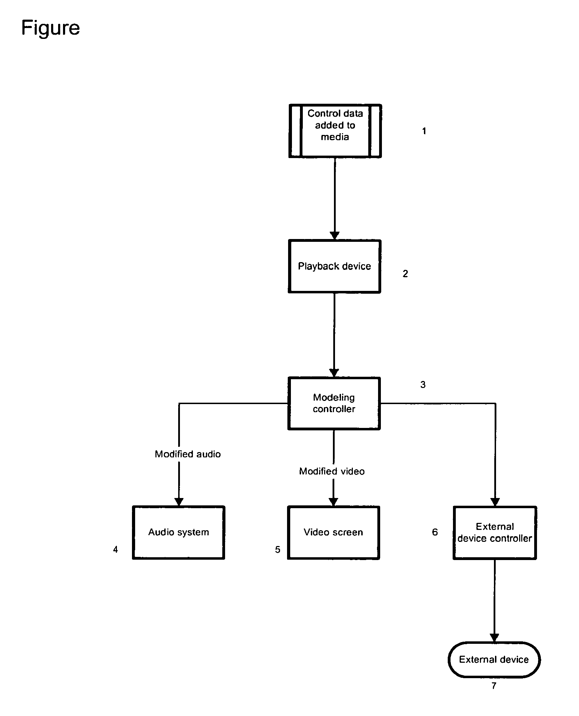

Embodiments of the present invention will now be described with reference to the accompanying Figure, which is a flowchart of a method of media content production and reproduction according to an embodiment of the invention.

### Detailed Description of the Embodiments

As shown in the Figure, a production system 1 creates and records media content in a media content format including associated control data, which media content is then distributed. The media content format is read by a media playback device 2 which extracts the control data and outputs it to a media modelling controller 3, which then modifies the media content in accordance with the control data prior to output to media reproduction apparatus, such as an audio reproduction system 4 and/or a video display screen 5. Additionally, the control data may control apparatus that does not reproduce the media content. For example, external device control data may be output to an external device controller 6 which is controls an external device 7 such as lighting apparatus for ambient lighting or a light show.

In one embodiment, the media content may comprise an audio track with embedded control information for controlling one or more types of lighting equipment. When the media content is reproduced, for example in a club or disco, the lighting effects may reflect the intentions of the recording artist rather than being derived solely from basic audio characteristics of the audio track itself. Alternatively, the control information may be for controlling other aspects of the reproduction environment.

In one embodiment, the control data may control the tonal output characteristics of the reproduction apparatus, for example according to the media content type. For example, a compilation of audio tracks of different genre may each have embedded control information indicative of the respective genre. The reproduction apparatus thereby adjusts its tonal reproduction characteristics automatically according to the indicated genre. The control information may vary for different sections of a media content item, so that a piece consisting of classical sections interspersed with rock sections may have corresponding control information associated with each section.

In another embodiment, the modelling controller 3 may automatically set the volume, bass and treble characteristics of the audio reproduction system 4 according to the control data, so as to optimise sound reproduction to suit different types of music in different environments. Advantageously, this allows the reproduction system 4 to be customised to the media content automatically, without user intervention.

In one specific example implemented in a vehicle, the modelling controller 3 automatically optimises the output characteristics of the audio system 4 to suit the music being played, for example enhanced bass for dance music, enhanced middle for rock music etc. Hence, the user does not need to change equaliser setting for each track, or for each CD. This may provide a safety advantage in vehicles.

At the time of recording the media content, the control data may be selected so as to produce a particular overall effect on reproduction, such as the ambience of a large stadium or a small club venue. Each media content item may have a plurality of sets of control information, and the reproduction apparatus may allow the user to select which set of control information is applied to the media content, or may select a set of control information automatically, for example according to the type of reproduction apparatus. Alternatively, the user may preselect user preferences, which are applied at the time of reproduction to select which control information is applied.

The control information may be used to inhibit reproduction of one or more sections of the content. For example, where the media content includes video content, the control information may indicate which sections of the video content contain rapid flashing images that could pose a risk to epileptics. An epileptic user may set a user preference to avoid such images, and the reproduction apparatus is then controlled to skip the sections indicated by the control information, or to filter the images in such a way that they are less likely to pose a risk.

In another example, where the media content includes one or more sections that are deemed unsuitable for certain categories of consumer, such as children, the control data may indicate those sections and include metadata about those sections, such as the minimum recommended age for consumption of those sections. The reproduction apparatus may be arranged to compare the metadata with preset consumer criteria, and prevent consumption of each section if the metadata for that section does not meet the criteria. For example, a section may be indicated as being suitable for consumers only aged 18 or over, and the reproduction apparatus may be set to prevent reproduction of content not suitable for consumers under 12; as a result, the indicated section may be blanked out or skipped, or reproduction of the media content may be stopped altogether.

The control information may control the reproduction apparatus to display a message or make another type of indication to the user, for example to prompt the user to perform a specified action.

The modelling controller 3 may be implemented by software, firmware and/or hardware. The modelling controller 3 may also control other parts or features of a consumer device that it is embedded into or connected to. The modelling controller may be connected wirelessly to the reproduction apparatus and/or the external device controller 6.

The modelling controller 3 may be discrete from reproduction apparatus, or may be integrated therewith. In one embodiment, modelling controller 3 and reproduction apparatus are integrated within a media player, for example a portable media player, mobile telephone or portable computing device.

### Alternative Embodiments

The embodiments described above are illustrative of rather than limiting to the present invention. Alternative embodiments apparent on reading the above description may nevertheless fall within the scope of the invention.

## Claims

1. A method of recording media content on a carrier, comprising recording media content in a media reproduction format that includes associated control information (1) for controlling reproduction of the media content.

2. A method as claimed in claim 1, wherein the control information (1) is constant for reproduction of the media content.

3. A method as claimed in claim 1, wherein the control information (1) varies according to the reproduction progress of the media content item.

4. A method as claimed in any preceding claim, wherein the control information (1) controls media reproduction of the media content.

5. A method as claimed in any preceding claim, wherein the control information (1) controls an effect ancillary to the reproduction of the media content, the effect preferably being one or more of a lighting effect, and an indication to the consumer.

6. A method as claimed in any preceding claim, wherein the control information (1) is embedded within the media content.

7. A method as claimed in any preceding claim, wherein the control information (1) comprises a plurality of control information items, from which one or more control information items are selectable by the user for controlling reproduction of the media content.

8. A method as claimed in claim 7, wherein the control information (1) is selectable according to a predefined user preference.

9. A method as claimed in any preceding claim, wherein the control information (1) designates one or more sections of the media content for which reproduction is controlled.

10. A method as claimed in claim 9, wherein the control information (1) is arranged selectively to inhibit reproduction of the one or more sections.

11. A method as claimed in claim 10, wherein the control information (1) is arranged to inhibit reproduction of the one or more sections according to a predefined setting of the media reproduction apparatus.

12. A method of media reproduction, comprising reproducing media content stored in a media reproduction format recorded according to the method of any preceding claim, and controlling the reproduction of the media content according to the control information (1).

13. Apparatus arranged to perform the method of any preceding claim.

14. A computer program product comprising program code arranged to perform the method of any one of claims 1 to 12.

15. A media content signal or carrier comprising media content recorded in a media reproduction format recorded according to the method of any one of claims 1 to 11.
